# EUROPEAN PATENT APPLICATION

(11) **EP 4 712 635 A1**
(43) Date of publication of application: **18.03.2026**
(21) Application number: 25197432.5
(22) Date of filing: 21.08.2025
(51) Int. Cl.: H04W 72/0453, H04W 16/14, H04W 84/12

(54) **COMMUNICATION APPARATUS, CONTROL METHOD, AND PROGRAM METHOD USING THE SAME**

(30) Priority: 12.09.2024 JP 2024158482
(71) Applicant: Canon Kabushiki Kaisha, Tokyo, 146-8501 (JP)
(72) Inventor: KOIKE, Kohtaro, Tokyo, 146-8501 (JP)
(74) Representative: Canon Europe Limited

(57) **Abstract**

A communication apparatus (102) that concurrently performs communication with an access point using a first communication interface as a station and communication with another apparatus functioning as a Client using a second communication interface as a Group Owner of a Wi-Fi Direct standard changes (S606, S607), in a case where a first wireless frame indicating a change of a frequency channel in use is received from the access point during a time when the first communication interface uses a frequency channel in a predetermined frequency band that needs support of a Dynamic Frequency Selection function and where the second communication interface uses a same frequency channel in the predetermined frequency band as that of the first communication interface, the frequency channel of the first communication interface and the second communication interface based on the first wireless frame.

## Description

### TECHNICAL FIELD

The present disclosure relates to a technique of setting a channel to be used in a wireless LAN complying with an IEEE 802.11 series standard.

### BACKGROUND

Currently, a wireless Local Area Network (LAN) represented by the Institute of Electrical and Electronics Engineers (IEEE) 802.11 series standard is widely used. In the wireless LAN, various frequency bands can be used, and frequency bands that may interfere with other systems such as a weather radar and an aviation radar can also be used. On the other hand, a communication apparatus using a frequency band that may interfere with other systems needs to support a mechanism called a DFS that switches the frequency channel in use to another frequency channel in accordance with detection of a signal of another system. Note that DFS is short for Dynamic Frequency Selection. Access points (APs) and stations (STAs) of a wireless LAN cannot use, for example, a predetermined frequency channel such as W53 or W56 of the 5-GHz band unless these support the DFS. A frequency band such as W53 or W56, which needs support of DFS, will sometimes be referred to as a DFS band hereinafter.

Also, the Wi-Fi° Alliance formulates the Wi-Fi Direct (WFD) standard that defines a procedure of establishing a communication link between STAs by exchanging communication parameters between the STAs without interposing an AP. In WFD Release1 (R1) that is a conventional standard, a Group Owner (GO) that plays the role of an AP cannot use a channel in the DFS band in communication of WFD. On the other hand, in WFD Release2 (R2), if an STA is connected, using a first communication interface (I/F), to an AP operating in a channel of the DFS band, it is allowed to function as a GO using the same channel in another communication I/F. That is, in WFD R2, in a case where a communication apparatus having a plurality of communication I/Fs is connected as an STA to an AP using a channel of the DFS band, it can use the DFS band as a GO by setting an operation channel as a GO to the channel.

### SUMMARY

Japanese Patent Laid-Open No. 2013-251926 describes a frequency channel setting method in a case where in a communication apparatus, a radar signal in the DFS band is detected in a plurality of different frequency channels used in a plurality of communication I/Fs. However, as described above, in the WFD R2, there are such restrictions that, for example, if a GO uses the DFS, it needs to use the same frequency channel as an STA, and efficient frequency channel setting methods considering the restrictions have not been examined.

The present disclosure provides a technique of appropriately setting a use channel in a communication apparatus that uses a plurality of communication interfaces capable of using frequency channels of the DFS band.

The present disclosure in its first aspect provides a communication apparatus as specified in claim 1. Optional features are specified in claims 2 to 13.

The present disclosure in its second aspect provides a control method as specified in claim 14.

The present disclosure in its third aspect provides a program as specified in claim 15.

Features of the present disclosure will become apparent from the following description of embodiments with reference to the attached drawings. The following description of embodiments is described by way of example.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
Fig. 1 is a view showing an example of a system configuration;
Fig. 2 is a view showing an example of the hardware configuration of a communication apparatus;
Fig. 3 is a view showing an example of the functional configuration of the communication apparatus;
Fig. 4 is a view for explaining the configuration of a CSA Element;
Fig. 5 is a sequence chart showing an example of the procedure of communication control in the system;
Fig. 6 is a flowchart showing an example of the procedure of channel change processing executed by the communication apparatus;
Fig. 7 is a sequence chart showing an example of the procedure of communication control in the system;
Fig. 8 is a flowchart showing an example of the procedure of channel change processing executed by the communication apparatus;
Fig. 9 is a sequence chart showing an example of the procedure of communication control in the system; and
Fig. 10 is a flowchart showing an example of the procedure of channel change processing executed by the communication apparatus.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

### (System Configuration)

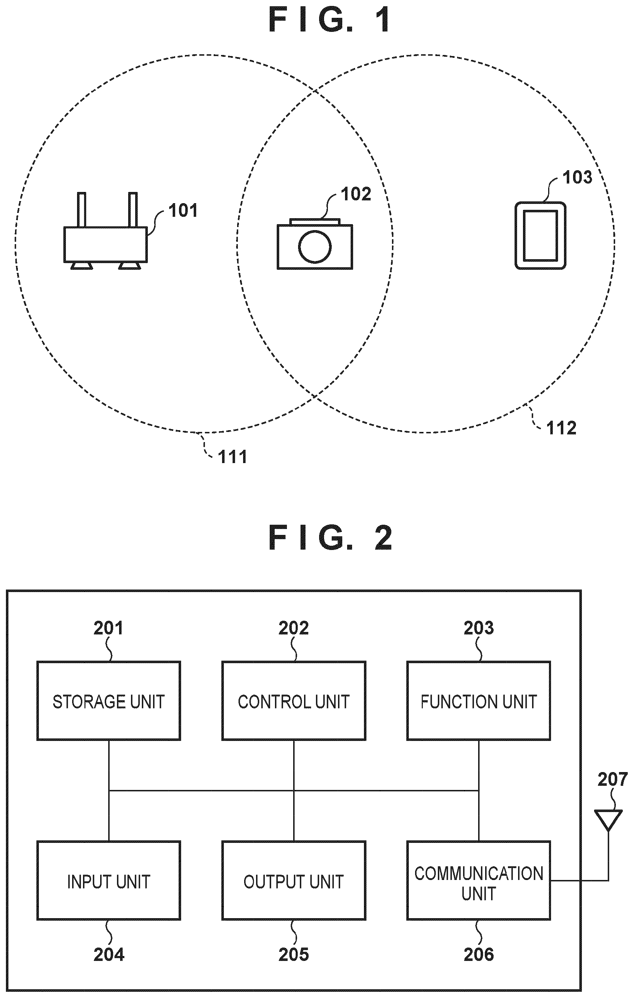

Fig. 1 is a view showing an example of the configuration of a wireless communication system according to this embodiment. The wireless communication system is configured to include an access point (AP 101), an image capturing apparatus 102, and an information communication terminal 103, each of which is a communication apparatus. The AP 101, the image capturing apparatus 102, and the information communication terminal 103 are configured to be able to execute wireless communication complying with the IEEE 802.11 standard series such as the IEEE 802.11bn standard, a preceding standard defined before that, or a succeeding standard defined after that. Note that IEEE is short for Institute of Electrical and Electronics Engineers. The image capturing apparatus 102 is configured to be able to perform communication complying with the IEEE 802.11 standard series as a station (STA) in, for example, a first network 111 formed by the AP 101. Also, the image capturing apparatus 102 has a communication function of Wi-Fi Direct (WFD) and is configured to be able to form a second network 112 as a P2P Group Owner (P2P GO) of WFD. The information communication terminal 103 functions as a P2P Client (P2P CL) of WFD and is connected to the image capturing apparatus 102 functioning as a P2P GO to perform wireless communication complying with WFD. Note that the P2P GO will sometimes be simply referred to as a GO, and the P2P CL will sometimes be simply referred to as a CL hereinafter. In this embodiment, the image capturing apparatus 102 concurrently (simultaneously) operates the function of the STA and the function of the GO, and is connected as a GO to the information communication terminal 103 while being connected as an STA to the AP 101. Note that the image capturing apparatus 102 can be able to individually set a channel (frequency channel) to be used in the GO and a channel to be used to connect as an STA to the AP 101. That is, the image capturing apparatus 102 may use the same channel in the function of the GO and the function of the STA or may use different channels. Note that in this embodiment, an image capturing apparatus and an information communication terminal are shown as an example, but other apparatuses having a similar communication function may be used. For example, a smartphone, a tablet, a personal computer (PC), a video camera, or the like may be used in place of the image capturing apparatus 102.

In this embodiment, as described above, the image capturing apparatus 102 forms the second network 112 as a GO and is connected to the information communication terminal 103 operating as a CL while being connected as an STA to the AP 101 using a plurality of communication interfaces. At this time, on condition that a frequency channel of the Dynamic Frequency Selection (DFS) band is used in the first network 111, the image capturing apparatus 102 can use the DFS band in the second network 112 as well. Note that in this embodiment, the DFS band indicates a predetermined frequency band such as W53 or W56, for which DFS support is needed, and a frequency band for which DFS support is not needed will sometimes be referred to as non-DFS band hereinafter. In this case, in the second network 112, the same frequency channel as the frequency channel used in the first network 111 needs to be used. Here, if, in a state in which the AP 101 or the image capturing apparatus 102 is connected using a frequency channel in the DFS band in the first network 111, a radar signal is detected in the frequency channel, the frequency channel in the first network 111 is changed using the DFS function. In this case, if the image capturing apparatus 102 uses the frequency channel in the DFS band in the second network 112 as well, the frequency channel needs to be changed even in the second network 112. That is, in a case where a frequency channel in the DFS band is used in the second network 112, if the channel in the first network 111 is changed, the image capturing apparatus 102 needs to change the channel even in the second network 112. On the other hand, in a case where a frequency channel in the non-DFS band is used in the second network 112, if the channel in the second network 112 is changed in accordance with a channel change in the first network 111, the efficiency may be lowered because of the unnecessary change of the use channel. In this embodiment, in consideration of this situation, there is provided a technique of appropriately setting a use channel in a communication apparatus that uses a plurality of communication interfaces capable of using frequency channels of the DFS band.

### (Apparatus Configuration)

Fig. 2 shows an example of the hardware configuration of a communication apparatus (the AP 101, the image capturing apparatus 102, or the information communication terminal 103) according to this embodiment. As shown in Fig. 2, the communication apparatus includes, as its hardware configuration, for example, a storage unit 201, a control unit 202, a function unit 203, an input unit 204, an output unit 205, a communication unit 206, and an antenna 207.

The storage unit 201 is configured to include one or more memories such as a ROM and a RAM, and stores computer programs configured to perform various kinds of operations to be described later, and various kinds of information such as communication parameters for wireless communication. Note that ROM is a short for Read Only Memory and RAM is a short for Random Access Memory. In addition to or in place of the memory such as a ROM or a RAM, the storage unit 201 may include a storage medium such as a flexible disk, a hard disk, an optical disk, a magnetooptical disk, a CD-ROM, a CD-R, a magnetic tape, a nonvolatile memory card, or a DVD. The storage unit 201 may include Solid State Drive (SSD). Also, the storage unit 201 may include a plurality of memories.

The control unit 202 is formed by one or more processors such as a CPU and an MPU, and controls the whole communication apparatus by executing, for example, computer programs stored in the storage unit 201. Note that CPU is a short for Central Processing Unit, and MPU is a short for Micro Processing Unit. The control unit 202 can be configured to execute processing of generating data or signals (wireless frames) to be transmitted in communication with another communication apparatus in addition to control of the whole communication apparatus. Note that the control unit 202 may be configured to, for example, execute processing such as control of the whole communication apparatus by cooperation of computer programs and an Operating System (OS) stored in the storage unit 201. In addition, the control unit 202 may include a plurality of processors such as a multi-core processor, and execute processing such as control of the whole communication apparatus by the plurality of processors. Also, the control unit 202 may be formed from an Application-Specific Integrated Circuit (ASIC), a Digital Signal Processor (DSP), a Field Programmable Gate Array (FPGA), or the like.

In addition, the control unit 202 controls the function unit 203 to execute predetermined processing such as image capturing, printing, or projection. The function unit 203 is hardware used by the communication apparatus to execute predetermined processing. For example, in the image capturing apparatus 102 or the information communication terminal 103, the function unit 203 may be an image capturing unit and performs processing for capturing an image of the periphery. Also, for example, if the communication apparatus is a printer, the function unit 203 is a print unit and performs print processing on a sheet such as paper based on, for example, print data stored in the storage unit 201 or acquired from the outside or via wireless communication. Also, for example, if the communication apparatus is a projector or smartglasses, the function unit 203 is a projection unit and performs projection processing of, for example, image data or video data stored in the storage unit 201 or acquired from the outside or via wireless communication. In a case of smartglasses, the projection surface is the retina of an end user, or the like. Data to be processed by the function unit 203 may be data stored in the storage unit 201, or may be data communicated with another communication apparatus via the communication unit 206 to be described later. Furthermore, the communication apparatus can provide a network storage function such as a Network Attached Storage (NAS). This function is provided as a web service such as a network storage service to another communication apparatus. For example, another communication apparatus is connected to a network storage service provided by the communication apparatus using a protocol such as SMB (Server Message Block), FTP (File Transfer Protocol), or WebDAV (Web Distributed Authoring and Versioning). The other communication apparatus can upload a file to the storage service or download a file in the storage.

The input unit 204 accepts various kinds of operations from the user. The output unit 205 performs various kinds of outputs to the user. Here, the output by the output unit 205 includes, for example, at least one of display on a screen, audio output by a speaker, and vibration output. Note that both the input unit 204 and the output unit 205 may be implemented by one module, like a touch panel. Also, each of the input unit 204 and the output unit 205 may be incorporated in the communication apparatus, or may be configured as an external apparatus connected to the communication apparatus.

The communication unit 206 controls wireless communication complying with the IEEE 802.11 standard series such as the IEEE 802.11bn standard or a preceding standard or a succeeding standard thereof, or controls Internet Protocol (IP) communication. The communication unit 206 executes, for example, wireless frames transmission/reception complying with the IEEE 802.11 standard series in cooperation with the antenna 207. Note that, for example, the communication unit 206 of each of the image capturing apparatus 102 and the information communication terminal 103 can be configured to execute control of wireless communication complying with the WFD standard. To perform wireless communication complying with, for example, the IEEE 802.11 standard series or the WFD, the communication unit 206 can be configured to be able to execute communication in a plurality of frequency bands such as the sub-GHz band, the 2.4-GHz band, the 5-GHz band, the 6-GHz band, the 7-GHz band, and the 60-GHz band. Also, the communication unit 206 can perform communication using bandwidths of 20 GHz, 40 MHz, 80 MHz, 160 MHz, and 320 MHz. Also, the communication unit 206 may be configured to be able to execute using a bandwidth of, for example, 240 MHz or 4 MHz. Note that the image capturing apparatus 102 may include, for example, the communication unit 206 configured to perform communication with the AP 101 to which it is connected as an STA and the communication unit 206 configured to perform communication with the information communication terminal 103 when the image capturing apparatus 102 functions as a GO of WFD. Similarly, the information communication terminal 103 may include the communication unit 206 for WFD and the communication unit 206 for communication with the AP 101. That is, the communication apparatus may include a plurality of communication units 206 (communication interfaces). Note that one communication unit 206 may provide a plurality of communication interfaces.

The antenna 207 is an antenna capable of transmitting/receiving a signal in at least one of frequency bands of, for example, the sub-GHz band, the 2.4-GHz band, the 5-GHz band, the 6-GHz band, the 7-GHz band, and the 60-GHz band. In this embodiment, one antenna 207 is shown. However, the number of antennas may be two or more. In an example, a different antenna may be prepared for each frequency band. Also, if there are a plurality of antennas, the communication apparatus may include a plurality of communication units 206 corresponding to the plurality of antennas.

Also, the communication unit 206 may comply with other communication standards such as Bluetooth^{®}, NFC, UWB, ZigBee, and MBOA in addition to the IEEE 802.11 standard series and the WFD standard. Note that UWB is short for Ultra Wide Band, and MBOA is short for Multi Band OFDM Alliance. Also, NFC is a short for Near Field Communication. The UWB includes a wireless USB, wireless 1394, and WiNET. Also, the communication unit 206 may comply with a communication standard of wired communication such as a wired LAN. Note that if the communication apparatus supports the NFC standard, the Bluetooth^{®} standard, or the wired communication standard described above, the communication unit 206 configured to perform control communication complying with the communication standard can be prepared. Note that the communication unit 206 and the antenna 207 may be provided as an integrated component or may be prepared as separate components.

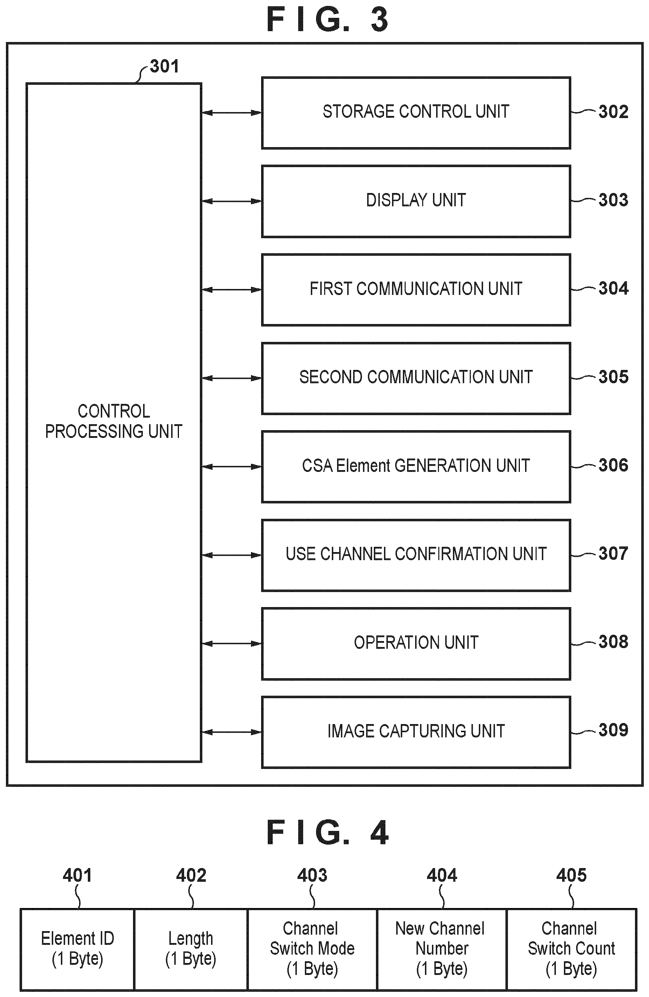

An example of the functional configuration of the communication apparatus (the AP 101, the image capturing apparatus 102, or the information communication terminal 103) according to this embodiment will be described next with reference to Fig. 3. The communication apparatus is configured to include, as its functional configuration, a control processing unit 301, a storage control unit 302, a display unit 303, a first communication unit 304, a second communication unit 305, a CSA Element generation unit 306, a use channel confirmation unit 307, an operation unit 308, and an image capturing unit 309. Note that CSA is short for Channel Switch Announcement. These functions can be implemented by, for example, executing programs stored in the storage unit 201 by the control unit 202 or by a processing function unit in the communication unit 206. Note that Fig. 3 is a view for explaining main functions of the communication apparatus according to this embodiment, and other functions are omitted. Hence, the communication apparatus can have, for example, functions for establishment of connection to a partner apparatus serving as a normal AP or STA or communication and functions generally provided in a communication apparatus, as a matter of course. Also, a plurality of function blocks in Fig. 3 may be integrated into one function block, or one function block may be divided into a plurality of function blocks.

The control processing unit 301 controls the units of the communication apparatus in accordance with input signals or programs to be described later. The control processing unit 301 performs not only control inside the apparatus but also control associated with wireless communication. Note that instead of controlling the whole apparatus by the control processing unit 301, the whole apparatus may be controlled by a plurality of pieces of hardware sharing processing therebetween. The storage control unit 302 stores control programs to be executed by the control processing unit 301 and information of parameters associated with communication such as a Traffic Identifier (TID) and link IDs used to identify one or more links. Various kinds of operations to be described later can be implemented by the control processing unit 301 executing control programs stored in the storage control unit 302. The display unit 303 presents information by, for example, character display for interactive operations and light-on/blinking/light-off of a lamp or the like. Note that the display unit 303 of the image capturing apparatus 102 or the information communication terminal 103 can be configured to be able to, for example, display a viewfinder image at the time of image capturing or display captured image data.

The first communication unit 304 and the second communication unit 305 are wireless communication interfaces used to communicate with external apparatuses. The first communication unit 304 and the second communication unit 305 can be configured to be able to execute wireless communication complying with, for example, the IEEE 802.11 standard series including the IEEE 802.11bn standard and the WFD standard. Note that the first communication unit 304 and the second communication unit 305 may be implemented using separate communication units 206, or both the first communication unit 304 and the second communication unit 305 may be implemented using one communication unit 206. In an example, the first communication unit 304 and the second communication unit 305 are configured to perform communication using separate antennas 207. In another example, the first communication unit 304 and the second communication unit 305 may perform communication using a common antenna by having a capability of, for example, separating signals received by communication using filters or the like. Alternatively, a common antenna may be used by quickly switching between the first communication unit 304 and the second communication unit 305 by the control processing unit 301 using Dynamic Rapid Channel Switching (DRCS). Note that in this embodiment, the image capturing apparatus 102 communicates with the AP 101 using the first communication unit 304, and communicates with the information communication terminal 103 using the second communication unit 305. Note that in the following explanation, the AP 101 and the information communication terminal 103 each communicate with the image capturing apparatus 102 and can communicate with other apparatuses using a plurality of communication interfaces such as the first communication unit 304 and the second communication unit 305. Also, the AP 101 and the information communication terminal 103 may each have only one communication interface. Each communication apparatus may have three or more communication interfaces (for example, a third communication unit (not shown) and the like). In this embodiment, the image capturing apparatus 102 concurrently (simultaneously) operates the plurality of communication interfaces by the first communication unit 304 and the second communication unit 305.

The CSA Element generation unit 306 generates a Channel Switch Announcement (CSA) Element that is an information element used by an AP or a GO to notify an STA that the channel should be changed. The CSA Element generation unit 306 transmits the CSA Element included in a Beacon frame or a Probe Response frame. The CSA Element will be described later.

The use channel confirmation unit 307 performs confirmation concerning a frequency channel in use. For example, upon receiving a CSA from the AP 101, the use channel confirmation unit 307 of the image capturing apparatus 102 confirms whether the frequency channel used by the image capturing apparatus 102 as a P2P GO is the same as the frequency channel used to communicate with the AP 101. Also, the use channel confirmation unit 307 can confirm whether the frequency channel used by the P2P GO is a frequency channel in the DFS band. In an example, the use channel confirmation unit 307 provides the result of confirmation to the first communication unit 304 or the second communication unit 305. Thus, the first communication unit 304 and the second communication unit 305 can perform use channel setting control based on the result of confirmation.

The operation unit 308 is used to accept a user operation. The operation unit 308 detects, for example, a user operation to a user interface such as a power button used to instruct ON/OFF of the power supply of the communication apparatus, a release button used to instruct image capturing, and a reproduction button used to instruct reproduction of image data. Also, if there exists an operation member such as a dedicated connection button used to start communication with another communication apparatus of a communication partner via the first communication unit 304 or the second communication unit 305, the operation unit 308 detects a user operation for the operation member. Upon detecting a user operation, the operation unit 308 notifies the control processing unit 301 of the detection result, and the control processing unit 301 control each function unit in accordance with the notification. The image capturing unit 309 controls, for example, an optical system that controls an optical lens unit, aperture/zoom/focus, and the like, and an image capturing element configured to convert light (video) introduced via the optical lens unit into an electrical video signal. The image capturing element can be configured to by, for example, a Complementary Metal Oxide Semiconductor (CMOS) or a Charge Coupled Device (CCD). In an example, image data generated by the image capturing unit 309 can be transmitted to another communication apparatus via the first communication unit 304 or the second communication unit 305.

An example of the configuration of the Channel Switch Announcement (CSA) Element will be described next with reference to Fig. 4. The CSA Element is configured to include an Element ID 401, a Length 402, a Channel Switch Mode 403, a New Channel Number 404, and a Channel Switch Count 405. The Element ID 401 stores an identifier (ID) indicating that this information element is a CSA. The Length 402 stores a values indicating the length of the information element. The Channel Switch Mode 403 stores 0 or 1 as information indicating a restriction concerning a wireless frame until the channel is changed. If the Channel Switch Mode 403 is set to "0", it indicates that there is no restriction. If the Channel Switch Mode 403 is set to "1", it indicates that there is such a restriction that inhibits wireless frame transmission until channel change is completed. The New Channel Number 404 stores a value indicating a channel number after the change. The Channel Switch Count 405 stores a value indicating a timing to switch the channel. The value indicating the timing is expressed using a timing called a Target Beacon Transmit Time (TBTT) at which an AP periodically transmits a Beacon frame. For example, if "1" is stored in the Channel Switch Count 405, it indicates that the channel is switched at the next Beacon transmission timing. On the other hand, if "0" is stored in the Channel Switch Count 405, it indicates that the channel is switched at an arbitrary timing. The CSA Element generation unit 306 generates a CSA Element having the configuration, and the first communication unit 304 or the second communication unit 305 can transmit the CSA Element included in a wireless frame.

### (Procedure of Processing)

An example of the procedure of processing executed by the wireless communication system according to this embodiment will be described next.

### <Processing Example 1>

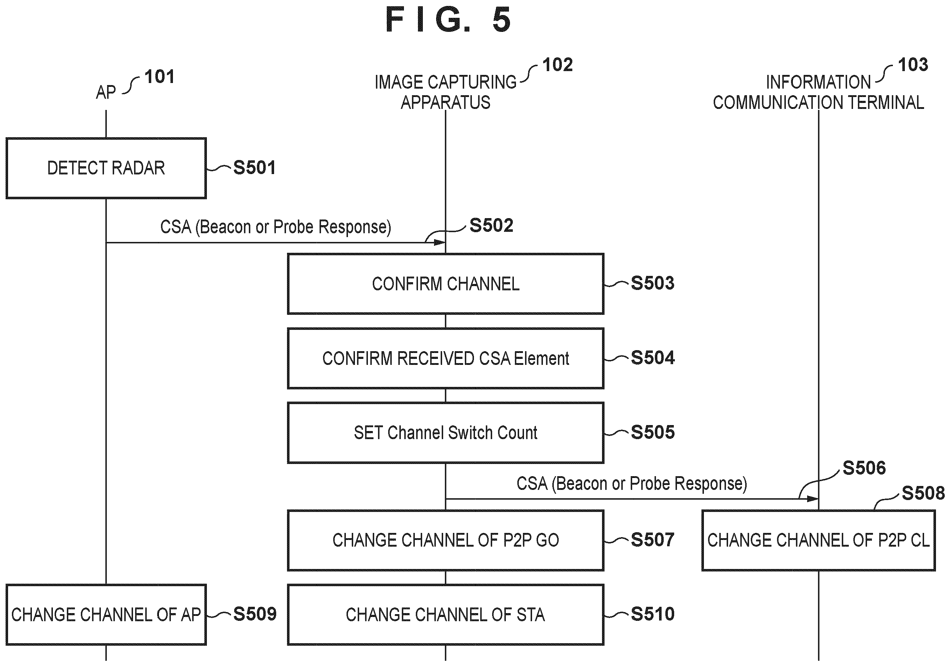

Fig. 5 is a view showing an example of the procedure of communication control when the channel between the image capturing apparatus 102 and the AP 101 is changed in a state in which the image capturing apparatus 102 is concurrently operating a plurality of communication interfaces. In Fig. 5, the image capturing apparatus 102 is connected as an STA to the AP 101 using the first communication interface, and operates as a GO and is connected to the information communication terminal 103 using the second communication interface. For example, the image capturing apparatus 102 is connected as an STA to the AP 101 using the first communication unit 304, and can concurrently operate as a GO using the second communication unit 305. Here, the image capturing apparatus 102 uses the same frequency channel in the DFS band in the first communication interface and the second communication interface.

In this state, upon detecting a radar signal by DFS (S501), the AP 101 starts processing of changing the frequency channel in use. The AP 101 transmits a CSA to the image capturing apparatus 102 connected as the STA (S502). Here, the AP 101 can transmit the CSA Element included in, for example, a Beacon frame. Also, upon receiving a search request (Probe Request) frame from an STA in an unconnected state, the AP 101 may transmit the CSA Element included in a Probe Response frame that is a response. Note that the AP 101 may transmit the CSA Element included in another wireless frame such as an Action frame. The AP 101 may transmit not the CSA Element but an information element of another name, which stores similar information for channel change and is included in a wireless frame.

The image capturing apparatus 102 receives the wireless frame including the CSA Element via, for example, the first communication unit 304. The image capturing apparatus 102 then controls the use channel confirmation unit 307 by, for example, the control processing unit 301 and confirms the channel in use (S503). For example, the image capturing apparatus 102 confirms whether the second communication unit 305 operating as a GO uses the same channel as the frequency channel that is being used (before change) by the first communication unit 304. Also, if the second communication unit 305 and the first communication unit 304 use the same frequency channel, the image capturing apparatus 102 confirms whether the frequency channel is a frequency channel in the DFS band. If it is confirmed that the first communication unit 304 and the second communication unit 305 use the same channel, the image capturing apparatus 102 executes processing for changing the frequency channel used by the second communication unit 305. That is, the image capturing apparatus 102 confirms the CSA Element in the wireless frame received in S502 (S504). Note that this confirmation can be performed at an arbitrary time as long as the frequency channel used as the STA can be changed at an appropriate timing and the frequency channel used as the GO can be changed as needed. For example, the confirmation may be performed at the time when the wireless frame is received in S502.

The image capturing apparatus 102 generates a CSA Element to be transmitted as the GO using the CSA Element generation unit 306. For example, based on the Channel Switch Count confirmed in S504, the image capturing apparatus 102 sets the contents of the CSA Element to be transmitted (S505). In an example, the image capturing apparatus 102 first specifies the timing to change the channel in the first communication unit 304 based on the Channel Switch Count confirmed in S504 and the interval of Beacon frames transmitted from the AP 101. The image capturing apparatus 102 then decides the value of the Channel Switch Count that should be set in the CSA Element to be transmitted by the self apparatus such that the channel of the second communication unit 305 is changed at a timing before the specified timing. That is, in WFD R2, a communication apparatus operating as a GO cannot use a frequency channel in the DFS band unless a frequency channel in the DFS band is used by a communication interface different from the communication interface operating as the GO. For this reason, the image capturing apparatus 102 sets the value of the Channel Switch Count such that the frequency channel used as the GO is changed before the frequency channel used as the STA is changed or at the same timing at the latest. Then, the image capturing apparatus 102 transmits the CSA including the Channel Switch Count set in S505 to the information communication terminal 103 via the second communication unit 305 functioning as the GO (S506). The image capturing apparatus 102 transmits the CSA Element included in a wireless frame such as a Beacon frame, a Probe Response frame, or an Action frame.

Then, after the Beacon frame is transmitted by the second communication unit 305 as many times as the count indicated by the Channel Switch Count set in S505, the image capturing apparatus 102 changes the use channel in the second communication unit 305 (S507). The information communication terminal 103 analyzes the CSA Element received in S506 and specifies the value of the Channel Switch Count. Then, after waiting until Beacon frames are transmitted from the image capturing apparatus 102 as many times as the count indicated by the value, the information communication terminal 103 changes the use channel to the channel indicated by the CSA Element (S508). Note that in S507 and S508, the use channel is changed after the image capturing apparatus 102 transmits Beacon frames as many times as the count set in S505 with respect to the timing of CSA transmission in S506 as a reference.

After that, the AP 101 changes the channel in use after Beacon frames are transmitted as many times as the count indicated by the Channel Switch Count in the CSA Element transmitted in S502 (S509). Also, the image capturing apparatus 102 changes the channel in use after Beacon frames are transmitted from the AP 101 as many times as the count indicated by the Channel Switch Count in the CSA Element confirmed in S504 (S510). Note that in S509 and S510, the use channel is changed after the AP 101 transmits Beacon frames as many times as the count designated in the CSA with respect to the timing of CSA transmission in S502 as a reference.

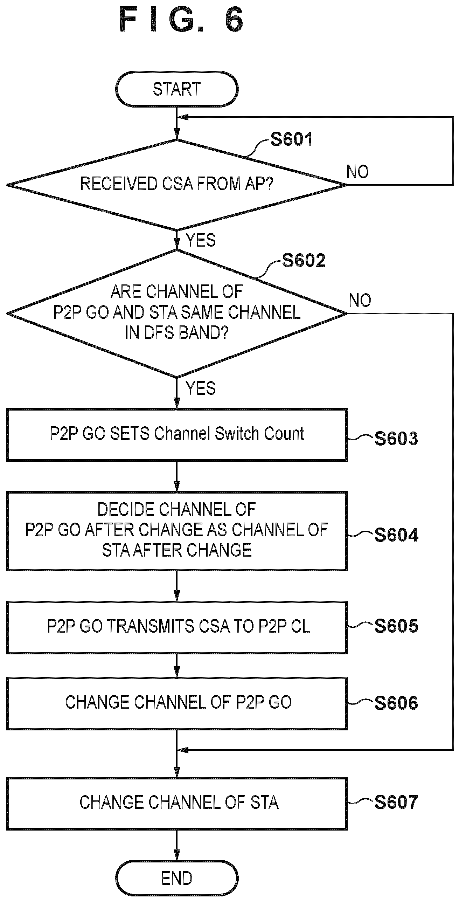

An example of the procedure of processing executed by the image capturing apparatus 102 will be described with reference to Fig. 6. Note that the following processing can be executed by an arbitrary communication apparatus that has a plurality of wireless communication interfaces and functions as a GO using the second interface while being connected to another communication apparatus using the first interface. That is, the image capturing apparatus 102 will be exemplified, but a communication apparatus other than this can execute the same processing as the following processing. Note that the following processing can be implemented by, for example, executing a program stored in the storage unit 201 by the control unit 202 or by executing, by the control unit 202 or the communication unit 206, a program stored in itself in advance. Note that the function units that execute processing steps to be described below are merely an example, and the processes may be performed by function units other than these.

The image capturing apparatus 102 receives a wireless frame including a CSA Element from the AP 101 via the first communication unit 304 (YES in step S601). The first communication unit 304 then notifies the control processing unit 301 that the CSA is received. The control processing unit 301 confirms, via the use channel confirmation unit 307, whether the frequency channels used by the first communication unit 304 and the second communication unit 305 are the same, and whether the frequency channel is a frequency channel in the DFS band (step S602). If the first communication unit 304 and the second communication unit 305 use different frequency channels or use a frequency channel in the non-DFS band (NO in step S602), the control processing unit 301 performs control to change only the frequency channel of the first communication unit 304 (step S607). That is, after the elapse of time needed by the AP 101 to transmit Beacon frames as many times as the count indicated by the Channel Switch Count acquired in step S601, the control processing unit 301 performs control to change the channel of the first communication unit 304 (step S607).

If the first communication unit 304 and the second communication unit 305 use the same frequency channel in the DFS band (YES in step S602), the control processing unit 301 sets the Channel Switch Count via the CSA Element generation unit 306 (step S603). The value to be set here can be decided based on the Channel Switch Count included in the CSA Element of the wireless frame acquired in step S601 and the Beacon frame transmission interval of the AP 101 and the GO of the image capturing apparatus 102. That is, the timing at which the first communication unit 304 changes the channel is specified first, and the Channel Switch Count is set such that the channel of the second communication unit 305 is changed at a timing before the specified timing. If the Channel Switch Count is set, the control processing unit 301 decides to set, for the second communication unit 305 operating as the GO, the same channel as the channel of the first communication unit 304 after the change (S604). Note that this is merely an example, and the second communication unit 305 may use a channel different from the channel of the first communication unit 304 after the change, as will be described later. However, if the second communication unit 305 uses a channel different from that of the first communication unit 304, the second communication unit 305 cannot use a channel in the DFS band. On the other hand, if the second communication unit 305 uses the same channel as the channel of the first communication unit 304 after the change and the first communication unit 304 uses a channel in the DFS band different from the channel before the change, the second communication unit 305 can use the channel in the DFS band.

The control processing unit 301 transmits a wireless frame including the CSA Element storing the Channel Switch Count set in step S603 to the information communication terminal 103 via the second communication unit 305 (step S605). The control processing unit 301 controls the second communication unit 305 such that the channel is changed after the second communication unit 305 transmits Beacon frames as many times as the count of the Channel Switch Count set in step S603 (step S606). After that, after the elapse of time needed by the AP 101 to transmit Beacon frames as many times as the count indicated by the Channel Switch Count acquired in step S601, the control processing unit 301 performs control to change the channel of the first communication unit 304 (step S607).

As described above, in this processing example, the image capturing apparatus 102 that concurrently operates a plurality of communication interfaces for the STA and the P2P GO determines whether to change the channel of the P2P GO in accordance with reception of the CSA from the AP 101. For example, if the STA and the P2P GO use the same frequency channel in the DFS band, the image capturing apparatus 102 also changes the frequency channel of the GO when a state in which the frequency channel should be changed is set. At this time, the image capturing apparatus 102 controls the timing to change the frequency channel of the GO such that the change of the frequency channel of the GO is completed at the timing to change the frequency channel of the STA. This can prevent the image capturing apparatus 102 from obtaining a state in which the GO uses the frequency channel in the DFS band in a period in which the STA does not use the frequency channel in the DFS band. Also, if the STA and the P2P GO use different frequency channels or use a frequency channel in the non-DFS band, the image capturing apparatus 102 changes only the frequency channel of the STA in accordance with reception of the CSA from the AP 101. That is, in this case, the image capturing apparatus 102 can inhibit change of the frequency channel of the GO. This can prevent the channel from being unnecessarily changed and prevent the communication efficiency in the GO from lowering.

### <Processing Example 2>

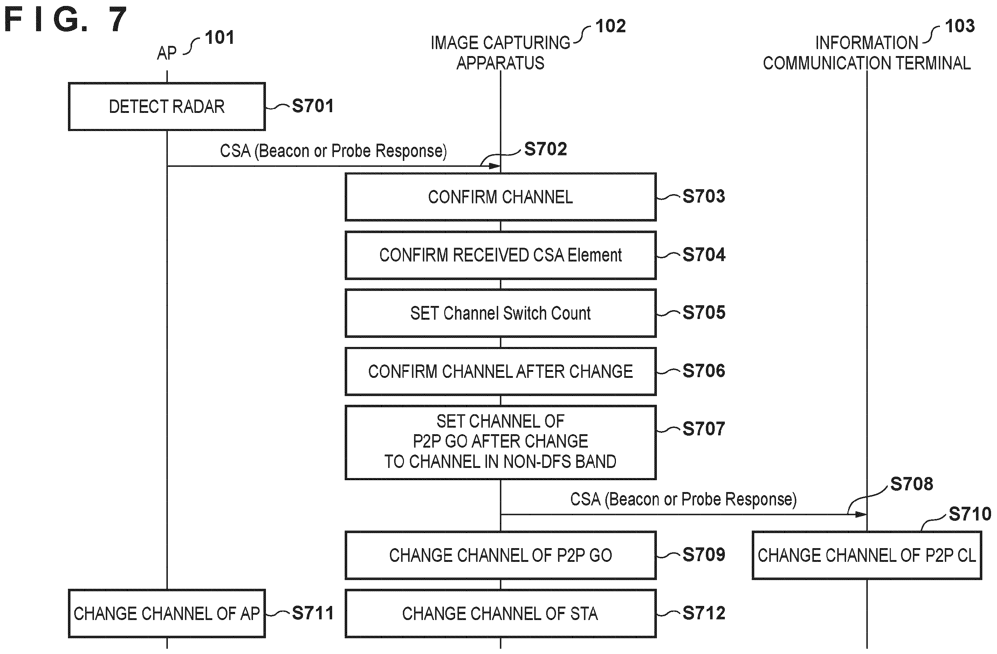

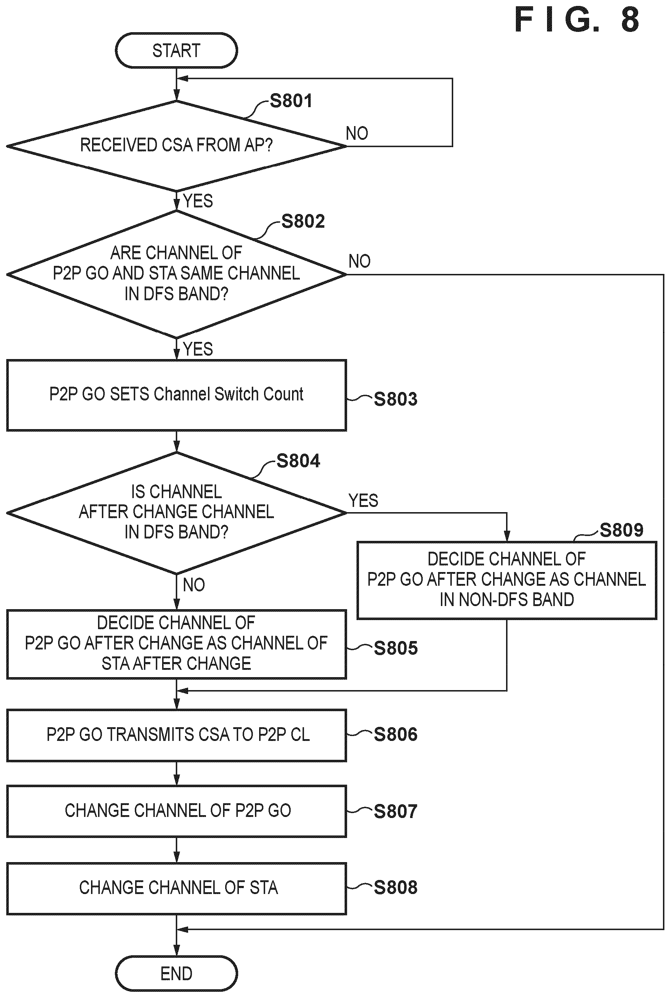

A case can be assumed in which if the image capturing apparatus 102 receives a CSA as the STA that uses the same frequency channel in the DFS band as the GO, the frequency channel of the STA after the change, which is designated by the New Channel Number of the CSA, is a frequency channel in the DFS band. In this case, the image capturing apparatus 102 can set the frequency channel of the GO to the same channel as the STA. In this case, however, if a radar signal is detected by the channel in the DFS band after the change, the channel change is needed again. Hence, in this case, the image capturing apparatus 102 may set the channel such that the GO uses a frequency channel in the non-DFS band. In this processing example, an example of the procedure of processing in this case will be described with reference to Figs. 7 and 8. Fig. 7 is a sequence chart showing an example of the procedure of communication control in the wireless communication system, and Fig. 8 is a flowchart showing an example of the procedure of processing executed by the image capturing apparatus 102.

S701 to S705 in Fig. 7 are the same as S501 to S505 in Fig. 5 and steps S801 to S803 in Fig. 8 are the same as steps S601 to S603 in Fig. 6, and a description thereof will be omitted. In this processing example, the image capturing apparatus 102 confirms whether the channel of the STA after the change, which is indicated by the New Channel Number of the CSA Element confirmed in S704 or step S801, is a channel in the DFS band (S706 or step S804). If it is confirmed that the channel of the STA after the change is a channel in the DFS band (YES in step S804), the image capturing apparatus 102 sets the channel of the GO after the change to a frequency channel in the non-DFS band (S707 and step S809). That is, in this case, the image capturing apparatus 102 changes the channel of the GO to a channel different from the channel of the STA. The image capturing apparatus 102 stores a value indicating the frequency channel set in S707 in the New Channel Number and generates a CSA Element storing a Channel Switch Count set in S705. The image capturing apparatus 102 then transmits a wireless frame (a Beacon frame, a Probe Response frame, an Action frame, or the like) including the generated CSA Element to the information communication terminal 103 (S708 and step S806). Subsequent processes of S709 to S712 and steps S807 and S808 are the same as S507 to S510 in Fig. 5 and steps S606 and S607 in Fig. 6, and a description thereof will be omitted. Note that if it is confirmed that the channel of the STA after the change is a channel in the non-DFS band (NO in step S804), the image capturing apparatus 102 can change the channel of the GO to the same channel as the channel of the STA after the change, as in step S604 of Fig. 6 (step S805). Note that this is merely an example, and if the channel of the STA is changed from the channel in the DFS band, regardless of the change destination, the image capturing apparatus 102 may change the channel of the GO to a channel different from that of the STA. Subsequent processes of steps S806 to S808 are the same as steps S605 to S607 in Fig. 6, and a description thereof will be omitted.

As described above, in this processing example, the use channel of the GO is inhibited from being changed from a frequency channel in the DFS band to another frequency channel in the DFS band. This can prevent the channel from being changed again in accordance with detection of a radar signal in the channel after the change and prevent the efficiency from lowering because of the frequent channel change. Also, for example, in a case where the frequency channel of the STA after the change is a channel in the DFS band, if the frequency channel of the GO is moved to the channel first, a period in which the GO uses a frequency channel in the DFS band, which is different from the use channel of the STA, occurs. That is, a frequency channel that is not allowed in WFD R2 may be set. For this reason, if the frequency channel of the STA after the change is a frequency channel in the DFS band and the GO uses the same channel as that of the STA, the GO needs to change the channel after waiting for completion of the change of the frequency channel of the STA. On the other hand, in this processing example, if the frequency channel of the STA after the change is a frequency channel in the DFS band, the frequency channel of the GO is changed to a channel in the non-DFS band. Thus, the change of the frequency channel of the GO can be executed without waiting for completion of the change of the frequency channel of the STA, and in particular, if the load in the GO is high, it is possible to prevent the period in which data communication cannot be performed as the GO from becoming long.

### < Processing Example 3>

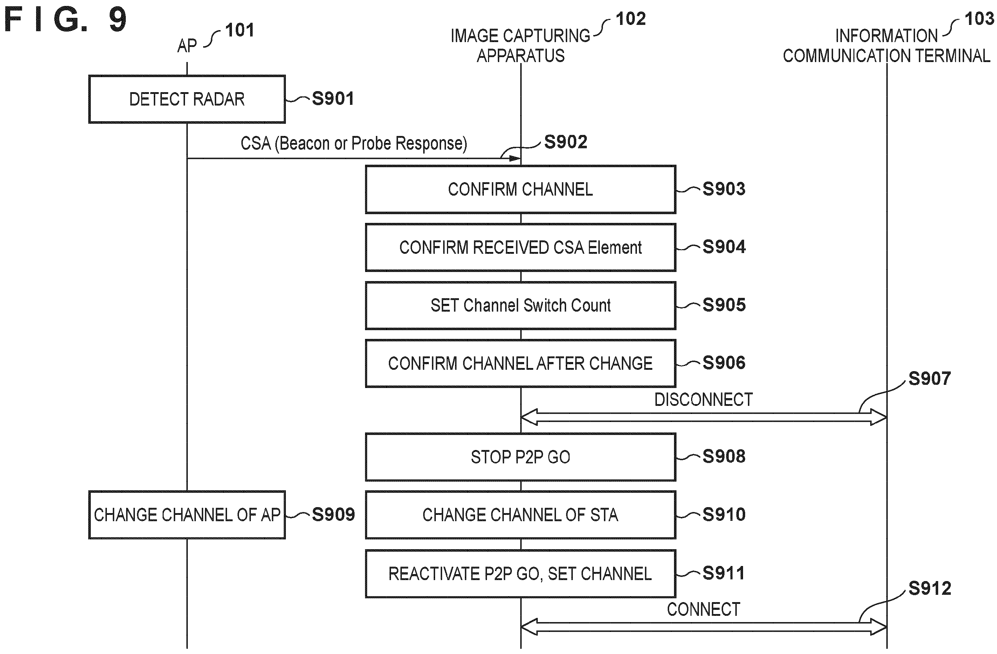

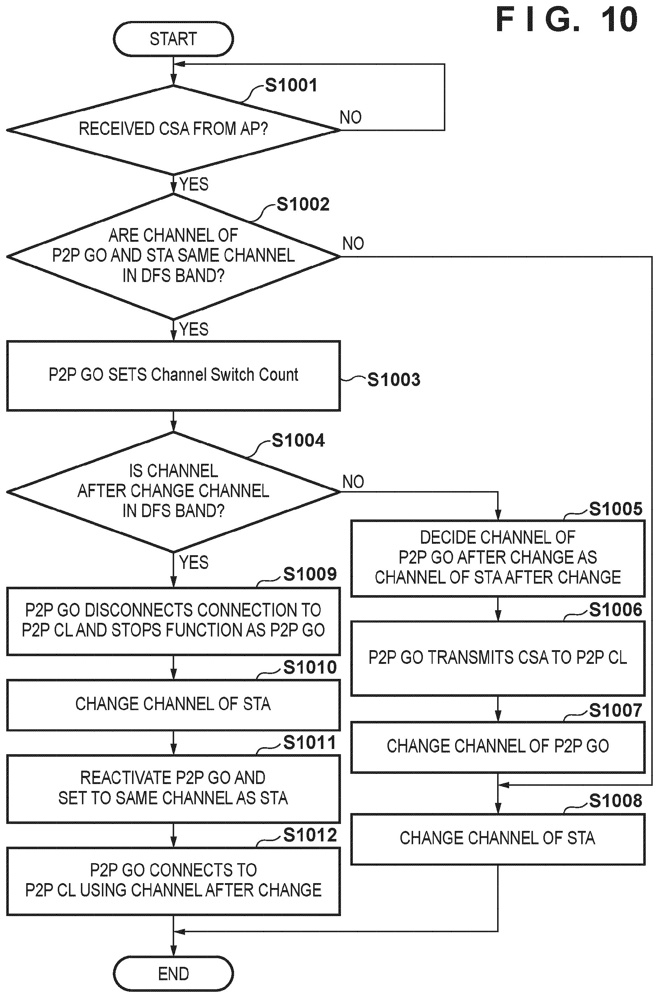

In this processing example, an example of the procedure of processing in a case where both frequency channels of the STA before and after a change are frequency channels in the DFS band, and the GO uses the same channel as that of the STA will be described. In this processing example as well, in the image capturing apparatus 102, as the frequency channel of the STA after the change, a channel in the DFS band is designated by the New Channel Number of a CSA received by the STA that uses the same frequency channel in the DFS band as that of the GO. In this processing example, processing performed in a case where the image capturing apparatus 102 sets the frequency channel of the GO to the same channel in the DFS band as that of the STA will be described with reference to Figs. 9 and 10. Fig. 9 is a sequence chart showing an example of the procedure of communication control in the wireless communication system, and Fig. 10 is a flowchart showing an example of the procedure of processing executed by the image capturing apparatus 102.

S901 to S906 in Fig. 9 are the same as S701 to S706 in Fig. 7 and steps S1001 to S1004 in Fig. 10 are the same as steps S801 to S804 in Fig. 8, and a description thereof will be omitted. Note that if it is confirmed that the frequency channel of the STA after the change is not a channel in the DFS band (the frequency channel is a channel in the non-DFS band) (NO in step S1004), the image capturing apparatus 102 performs the same process as in step S805 to S808 of Fig. 8 (steps S1005 to S1008). These processes are the same as described above, and a description thereof will not be repeated here.

On the other hand, if it is confirmed that the frequency channel of the STA after the change is a channel in the DFS band (YES in step S1004), the image capturing apparatus 102 starts processing for using, even in the GO, the channel in the DFS band. If the frequency channel of the GO after the change is a channel in the DFS band, the image capturing apparatus 102 needs to inhibit the channel of the GO from being changed before the change of the frequency channel of the STA. Also, after the change of the frequency channel of the STA, the image capturing apparatus 102 must not continuously use, in the GO, the channel in the DFS band before the change. For this reason, in this processing example, the image capturing apparatus 102 controls the second communication unit 305 by the control processing unit 301, thereby disconnecting the connection to the information communication terminal 103 as the GO and stopping the function as the GO (S907 and S908, and step S1009). Then, the image capturing apparatus 102 controls the first communication unit 304 by the control processing unit 301, thereby changing the use channel of the STA to the channel indicated by the New Channel Number confirmed in S906 or step S1001 (S910 and step S1010). Similarly, the use channel of the AP 101 is also changed (S909). Note that the timings of changing the use channels of the AP 101 and the STA function of the image capturing apparatus 102 are the same as in the other processing examples described above.

After that, the image capturing apparatus 102 controls the second communication unit 305 by the control processing unit 301, thereby reactivating the function as the GO and setting the use channel of the GO such that it uses the same channel as the STA (S911 and step S1011). Then, the image capturing apparatus 102 controls the second communication unit 305 by the control processing unit 301, thereby connecting to the P2P CL using the channel after the change (S912 and step S1012). Note that, for example, when disconnecting the connection to the information communication terminal 103, the image capturing apparatus 102 can notify the information communication terminal 103 of information indicating the channel after the change. Also, for example, after the GO function is reactivated, the image capturing apparatus 102 may transmit the information indicating the use channel after the change to the information communication terminal 103 using a Beacon frame or a Probe Response frame.

As described above, in this processing example, to change the use channel of the GO from a frequency channel in the DFS band to another frequency channel in the DFS band, the image capturing apparatus 102 temporarily stops the operation as the GO and, after the change of the channel of the STA, reactivates the GO using the channel after the change. This can prevent a state in which the GO uses a channel in the DFS band different from the channel in the DFS band used by the STA. This can facilitate management of use channels in the image capturing apparatus 102. Particularly in a case where communication as the GO is allowed to be interrupted for a predetermined period, if the GO and the STA use the same frequency channel, it is possible to efficiently manage the use channels in the image capturing apparatus 102 without largely lowering the communication efficiency. Note that as an example, the image capturing apparatus 102 may determine whether to permit using a channel in the DFS band as the frequency channel of the GO in accordance with, for example, the magnitude of the communication load on the GO. In addition, it may be determined based on another criterion whether to permit using a channel in the DFS band as the frequency channel of the GO.

As described above, according to this embodiment, a communication apparatus such as the image capturing apparatus 102 that uses a plurality of communication interfaces capable of using frequency channels in the DFS band can appropriately set a use channel.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. A communication apparatus (102) comprising:
communication means (206) capable of executing communication complying with an IEEE 802.11 standard series using a plurality of communication interfaces;
confirmation means (307) configured to, in a case where communication with an access point, AP, (101) using a first communication interface as a station, STA, and communication with another apparatus functioning (103) as a Client, CL, using a second communication interface as a Group Owner, GO, of a Wi-Fi Direct, WFD, standard are concurrently performed, and in a case where a first wireless frame indicating a change of a frequency channel in use is received from the AP during a time when the first communication interface uses a frequency channel in a predetermined frequency band that needs support of a Dynamic Frequency Selection, DFS, function, confirm whether the second communication interface uses a same frequency channel in the predetermined frequency band as that of the first communication interface; and
change means (301) configured to, in a case where it is confirmed that the second communication interface uses the same frequency channel in the predetermined frequency band as that of the first communication interface, change the frequency channel of the first communication interface and the second communication interface based on the first wireless frame.

2. The apparatus according to claim 1, wherein
in a case where the frequency channel of the first communication interface after the change is a frequency channel in a frequency band that does not need support of the DFS function, the change means is configured to change the frequency channel of the second communication interface to the same frequency channel as the frequency channel of the first communication interface after the change.

3. The apparatus according to claim 1 or 2, wherein
in a case where the frequency channel of the first communication interface after the change is a frequency channel in the frequency band that needs support of the DFS function, the change means is configured to change the frequency channel of the second communication interface to a frequency channel in the frequency band that does not need support of the DFS function, which is different from the frequency channel of the first communication interface after the change.

4. The apparatus according to any one of claims 1 to 3, wherein
the change means is configured to change the frequency channel of the second communication interface before a timing to change the frequency channel of the first communication interface specified by the first wireless frame.

5. The apparatus according to any one of claims 1 to 4, wherein
the change means is configured to transmit, to the other apparatus functioning as the CL, a second wireless frame including information indicating a timing to change the frequency channel of the second communication interface and the frequency channel of the second communication interface after the change.

6. The apparatus according to claim 5, wherein
the second wireless frame is one of a Beacon frame, a Probe Response frame, and an Action frame including a Channel Switch Announcement, CSA, Element.

7. The apparatus according to claim 6, wherein
the change means is configured to change the frequency channel of the second communication interface when the Beacon frame is transmitted as many times as a predetermined count as the GO, and to transmit, to the other apparatus, the second wireless frame in which the predetermined count is stored as a value of a Channel Switch Count of the CSA Element.

8. The apparatus according to claim 6 or 7, wherein
the change means is configured to transmit, to the other apparatus, the second wireless frame in which the frequency channel of the second communication interface after the change is stored as a value of a New Channel Number of the CSA Element.

9. The apparatus according to claim 1, wherein
in a case where the frequency channel of the first communication interface after the change is a frequency channel in the frequency band that needs support of the DFS function, the change means is configured to stop a function as the GO by disconnecting connection to the other apparatus functioning as the CL in the second communication interface, and after the change of the frequency channel of the first communication interface, to reactivate the function as the GO using the same frequency channel as the frequency channel of the first communication interface after the change and connects to the other apparatus.

10. The apparatus according to any one of claims 1 to 9, wherein
the first wireless frame is one of a Beacon frame, a Probe Response frame, and an Action frame including a Channel Switch Announcement, CSA, Element.

11. The apparatus according to claim 10, wherein
after reception of the first wireless frame, the change means is configured to change the frequency channel of the first communication interface in accordance with an elapse of a period in which the AP transmits the Beacon frame as many times as a count indicated by the value of the Channel Switch Count in the CSA Element of the first wireless frame.

12. The apparatus according to claim 10 or 11, wherein
the change means is configured to change the frequency channel of the first communication interface to a frequency channel specified by the value of the New Channel Number of the CSA Element of the first wireless frame.

13. The apparatus according to any one of claims 1 to 12, wherein
in a case where it is confirmed that the second communication interface uses a frequency channel different from that of the first communication interface or in a case where it is confirmed that the second communication interface uses the same frequency channel as that of the first communication interface, which is a frequency channel in a frequency band different from the predetermined frequency band, based on the first wireless frame, the change means is configured to change the frequency channel of the first communication interface and does not change the frequency channel of the second communication interface.

14. A control method executed by a communication apparatus (102) capable of executing communication complying with an IEEE 802.11 standard series using a plurality of communication interfaces, comprising:
in a case where communication with an access point, AP, (101) using a first communication interface as a station, STA, and communication with another apparatus (103) functioning as a Client, CL, using a second communication interface as a Group Owner, GO, of a Wi-Fi Direct, WFD, standard are concurrently performed, and in a case where a first wireless frame indicating a change of a frequency channel in use is received from the AP during a time when the first communication interface uses a frequency channel in a predetermined frequency band that needs support of a Dynamic Frequency Selection, DFS, function, confirming (S602) whether the second communication interface uses the same frequency channel in the predetermined frequency band as that of the first communication interface; and
in a case where it is confirmed that the second communication interface uses the same frequency channel in the predetermined frequency band as that of the first communication interface, changing (S606, S607) the frequency channel of the first communication interface and the second communication interface based on the first wireless frame.

15. A computer program comprising instructions which, when the program is executed by a computer, cause the computer to carry out the control method of claim 14.
